# EUROPEAN PATENT SPECIFICATION

(11) **EP 4 100 656 B1**
(45) Date of publication and mention of the grant of the patent: **03.09.2025**
(21) Application number: 21751086.6
(22) Date of filing: 01.02.2021
(51) Int. Cl.: F16C 33/32, B28B 1/00

(54) **CERAMIC ROLLING ELEMENT WITH SKELETAL STRUCTURE**
KERAMISCHES WÄLZELEMENT MIT SKELETTSTRUKTUR
ÉLÉMENT DE ROULEMENT EN CÉRAMIQUE AYANT UNE STRUCTURE SQUELETTIQUE

(30) Priority: 04.02.2020 US 202062969938 P; 26.01.2021 US 202117158297
(43) Date of publication of application: 14.12.2022
(73) Proprietor: Schaeffler Technologies AG & Co. KG, 91074 Herzogenaurach (DE)
(72) Inventor: HOLLEN, Perry, Fort Mill, South Carolina 29708 (US); MASBOU, Jean-Francois, Fort Mill, South Carolina 29708 (US)
(86) International application number: PCT/US2021/016037
(87) International publication number: WO 2021/158473

(56) References cited:
- CN-U- 208 008 687
- DE-A1- 102016 221 609
- JP-A- 2001 294 478
- JP-A- H0 771 460
- JP-A- H06 280 880
- US-A1- 2017 036 395
- US-A1- 2017 036 395

## Description

### CROSS-REFERENCE TO RELATED APPLICATIONS

This application claims priority to U.S. Provisional Patent Application 62/969,938 filed February 4, 2020, and to U.S. Patent Application 17/158,297 file January 26, 2021.

### TECHNICAL FIELD

The disclosure concerns bearing rolling element structures and a method for its production. More particularly, the disclosure pertains to bearing rolling elements which have a lattice inner core.

### BACKGROUND

Bearings reduce the friction between components which are intended to move relative to one another, especially as force is transmitted from one of the components to the other. In rolling element bearings, a raceway is formed in each of the two components and a set of elements are contained within the raceways, separating the components. The contact between the elements and the raceways is predominantly rolling contact as opposed to sliding contact, thereby dramatically reducing the resistance to relative motion. In some applications, the rolling elements may be spaced relative to one another by a cage. Rolling elements may be balls, cylindrical rollers, tapered rollers, or spherical rollers.

Rolling elements may be made of metal, ceramics, or other materials depending on the application. In some applications, ceramic rolling elements offer advantages over their steel counterparts. The density, lower than steel for most ceramics (Silicon Nitride Si₃N₄ in particular), makes a very strong and light part allowing for good heat dissipation. It also offers electrical insulation properties valuable in some applications. The lower weight is also beneficial in high-speed applications by reducing centrifugal forces and improving system efficiency.

The main issues of the current solid ceramic rolling elements are the costs of the material and the length of time required to produce such a product. The typical manufacturing process includes making a blank by mixing a ceramic powder with bonding agents, then pressing the mixture into a die. The resulting blank can be either machined, prior to sintering, or sintered directly followed by several processing steps to reach final dimensions and surface finish. The bonding material is required in order for the ceramic particles to hold their shape after removal from the die. Although the bonding material is required to make the rolling element, it must be removed during the hardening process to produce a pure ceramic product with the highest possible levels of particulate density. Extreme heat is required to burn off the bonding materials during the ceramic hardening. Larger rolling elements require longer processing times with more potential for distortion from shrinkage. JP 2001-294 478 A2 discloses solid spherical ceramic rolling elements and a method of production such rolling elements. JP 06-280 880 A2 discloses a manufacturing method for hollow balls to be used as rolling elements in roller bearings. A foamed polystyrene sphere is covered with metal or ceramic powder, then the polystyrene core is baked out and the remaining shell is sintered. US 2017-0 036 395 A discloses an additive manufacturing or 3D-printing of bearing components like rolling elements, wherein different first and second material compositions are used to produce the component. In one embodiment, the second material constitutes a skeletal framework and is embedded in the first material. DE 10 2016 221 609 A1 discloses a ball-shaped roller for a bearing comprising a pore-free shell and a porous core.

The downside of the above-described process is high cost due to expensive material (up to 70% of total cost) and multiple, very long processing steps (typically between 150 and 500 hours). This high cost limits the applications of these products to niche fields where heat or speed are critical factors. Furthermore, as blanks are produced in a die, tooling cost and delivery are important factors dramatically increasing the cost-effectiveness for low-volume applications.

### SUMMARY

According to the invention, a rolling element for a bearing includes a continuous outer shell and a lattice structured core showing a skeletal framework with open space in the lattice within the outer shell. The shell and the core are made of a ceramic. The shell has a spherical outer surface. The lattice structured core may be bonded to an inner surface of the outer shell, for example, by being integrally formed with the outer shell.

### BRIEF DESCRIPTION OF THE DRAWINGS

Figure 1 is a cut-away view of a known hollow ball rolling element.
Figure 2 is a cut-away view of a partially hollow ball rolling element with a lattice core.

### DETAILED DESCRIPTION

Embodiments of the present disclosure are described herein. It should be appreciated that like drawing numbers appearing in different drawing views identify identical, or functionally similar, structural elements. Also, it is to be understood that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations within the scope of the appended claims.

The terminology used herein is for the purpose of describing particular aspects only, and is not intended to limit the scope of the present disclosure. Unless defined otherwise, all technical and scientific terms used herein have the same meaning as commonly understood to one of ordinary skill in the art to which this disclosure belongs. Although any methods, devices or materials similar or equivalent to those described herein can be used in the practice or testing of the disclosure, the following example methods, devices, and materials are now described.

Use of partially hollow rolling elements offers advantages in many applications regardless of material and geometric configurations.

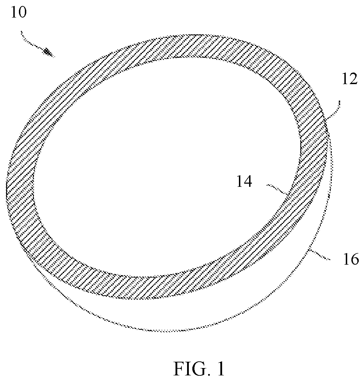

Figure 1 is a cut-away view illustrating a known hollow ball rolling element 10. Rolling elements other than balls may also be hollow. The ball includes a shell 12 with an inner spherical surface 14 and an outer spherical surface 16. The shell must be sufficiently thick to carry the design load. Hollow ceramic rolling elements are particularly advantageous. For a given rolling element diameter, a hollow rolling element uses substantially less material, reducing both cost and mass. Furthermore, evacuating the bonding materials from the shell requires substantially less time than removing them from the core of a solid element.

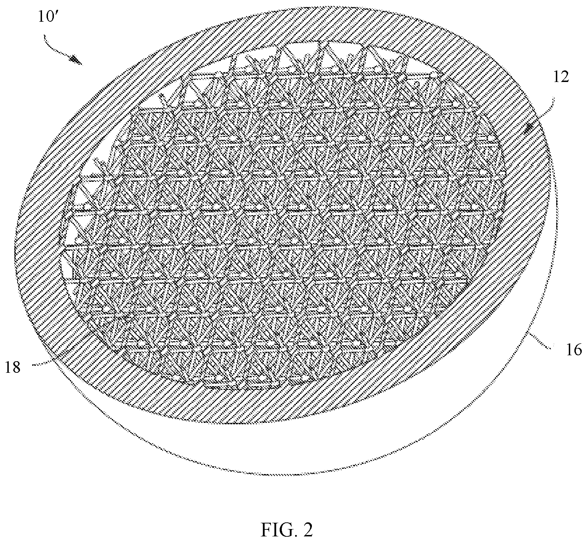

Figure 2 is a cut-away view illustrating a partially hollow ball rolling element 10' with a lattice structured core 18 comprising a skeletal structure with open space in the lattice. The skeletal framework provides extra strength, increasing the load capacity or decreasing the required shell thickness for a given design load. The open space in the lattice permits the bonding material from the lattice material to move easily to the inner surface of the shell during the sintering process, such that sintering times are substantially reduced relative to a solid.

Conventional molding processes are unsuitable for fabricating the blanks for the balls of Figure 2. However, additive manufacturing processes (sometimes called 3D printing) are capable of producing these blanks.

While exemplary embodiments are described above, it is not intended that these embodiments describe all possible forms encompassed by the claims. The words used in the specification are words of description rather than limitation, and it is understood that various changes can be made without departing from the scope of the appended claims.

## Claims

1. A rolling element (10') for a bearing comprising:
a continuous outer shell (12) having a spherical outer surface (16); and
a lattice structured core (18) showing a skeletal framework with open space in the lattice within the outer shell (12),
wherein the outer shell (12) and the lattice structured core (18) are made of a ceramic.

2. The rolling element (10') of claim 1, wherein the lattice structured core (18) is bonded to an inner surface (14) of the outer shell (12).

3. The rolling element (10') of claim 2 wherein the lattice structured core (18) is integrally formed with the outer shell (12).

4. A method to produce a ceramic rolling element (10') according to one of claims 1 through 3, wherein a 3D-printing method is used to integrally form the lattice structured core (18) having a skeletal framework with open space in the lattice with the outer shell (12) and to bond the lattice structured core (18) to the inner surface (14) of the outer shell (12).

## Patentansprüche

1. Wälzkörper (10') für ein Lager, umfassend:
eine durchgehende Außenhülle (12) mit einer sphärischen Außenfläche (16); und
einen gitterstrukturierten Kern (18), der ein Skelettgerüst mit offenem Raum im Gitter innerhalb der Außenhülle (12) aufweist,
wobei die Außenhülle (12) und der gitterstrukturierte Kern (18) aus Keramik bestehen.

2. Wälzkörper (10') nach Anspruch 1, wobei der gitterstrukturierte Kern (18) mit einer Innenfläche (14) der Außenhülle (12) verbunden ist.

3. Wälzkörper (10') nach Anspruch 2, wobei der gitterstrukturierte Kern (18) einstückig mit der Außenhülle (12) ausgebildet ist.

4. Verfahren zur Herstellung eines keramischen Wälzkörpers (10') nach einem der Ansprüche 1 bis 3, wobei ein 3D-Druckverfahren verwendet wird, um den gitterstrukturierten Kern (18), der ein Skelettgerüst mit offenem Raum im Gitter innerhalb der Außenhülle (12) aufweist, einstückig mit der Außenhülle (12) auszubilden und den gitterstrukturierten Kern (18) mit der Innenfläche (14) der Außenhülle (12) zu verbinden.

## Revendications

1. Élément de roulement (10') destiné à un palier comprenant :
une coque extérieure continue (12) ayant une surface extérieure sphérique (16) ; et
un noyau (18) structuré en treillis présentant une ossature squelettique comportant un espace ouvert dans le treillis à l'intérieur de la coque extérieure (12),
dans lequel la coque extérieure (12) et le noyau (18) structuré en treillis sont constitués d'une céramique.

2. Élément de roulement (10') selon la revendication 1, dans lequel le noyau (18) structuré en treillis est collé à une surface intérieure (14) de la coque extérieure (12).

3. Élément de roulement (10') selon la revendication 2, dans lequel le noyau (18) structuré en treillis est formé d'un seul tenant avec la coque extérieure (12).

4. Procédé de production d'un élément de roulement (10') en céramique selon l'une des revendications 1 à 3, dans lequel un procédé d'impression 3D est utilisé pour former d'un seul tenant le noyau (18) structuré en treillis ayant une ossature squelettique comportant un espace ouvert dans le treillis avec la coque extérieure (12) et pour coller le noyau (18) structuré en treillis à la surface intérieure (14) de la coque extérieure (12).
